# FASCICULE DE BREVET EUROPEEN

(11) **EP 3 899 411 B1**
(45) Date de publication et mention de la délivrance du brevet: **13.09.2023**
(21) Numéro de dépôt: 19821118.7
(22) Date de dépôt: 19.12.2019
(51) Int. Cl.: F41G 7/22, G02B 17/08, G01S 7/481

(54) **DISPOSITIF DE DETECTION OPTIQUE D'UN ENGIN VOLANT AUTOGUIDE**
OPTISCHER DETEKTOR EINES SELBSTGEFÜHRTEN FLUGZEUGS
OPTICAL DETECTION DEVICE OF A SELF-GUIDED FLYING VEHICLE

(30) Priorité: 20.12.2018 FR 1873483
(43) Date de publication de la demande: 27.10.2021
(73) Titulaire: Safran Electronics & Defense, 75015 Paris (FR)
(72) Inventeur: DAVENEL, Arnaud, 92100 BOULOGNE BILLANCOURT (FR); MARIE, Daniel, 92100 BOULOGNE BILLANCOURT (FR)
(74) Mandataire: Cabinet Le Guen Maillet
(86) Numéro de dépôt international: PCT/EP2019/086243
(87) Numéro de publication internationale: WO 2020/127688

(56) Documents cités:
- FR-A- 1 605 517
- US-A- 2 823 612
- US-B2- 7 804 053

## Description

### DOMAINE TECHNIQUE

La présente invention concerne le domaine des dispositifs de détection optique embarqués sur des engins volants autoguidés.

### ETAT DE LA TECHNIQUE ANTERIEURE

Un engin volant autoguidé se déplace de manière totalement automatique grâce à un système de guidage embarqué dont la fonction est de maîtriser l'évolution de la trajectoire de l'engin volant autoguidé afin d'atteindre un objectif. Pour cela, un tel système de guidage comporte d'une part un détecteur ou dispositif de détection permettant de détecter l'objectif et en particulier de déterminer la distance et l'écart angulaire par rapport à cet objectif et d'autre part un élaborateur d'ordre dont le rôle est de calculer les commandes et de les transmettre à la chaîne de pilotage. Les détecteurs d'engins volants autoguidés récupèrent des informations issues de l'environnement, généralement sous forme de rayonnements électromagnétiques. Selon les moyens de détection utilisés, les rayonnements détectés peuvent être de différentes natures telles que des ondes radar ou encore des rayonnements optiques dans le visible ou l'infrarouge. Des imageurs sont également utilisés dans certains cas.

Concernant la détection de rayonnements optiques, un dispositif de détection optique d'engin volant autoguidé comporte généralement une fenêtre ou hublot dont la transparence laisse passer le signal optique incident, un système optique permettant de diriger et focaliser le signal optique et un détecteur ou capteur optique relié à un dispositif de traitement de l'information.

Habituellement, les dispositifs de détection optique sont placés à l'avant des engins volants autoguidés et plus précisément sur leur dôme. Cette position leur confère un champ de vue important puisqu'aucune partie de l'engin ne fait obstacle aux rayonnements issus de l'avant et des côtés de l'engin.

Un problème posé par cette position à l'avant de l'engin volant autoguidé est l'échauffement thermique du dispositif de détection optique, lié à la vitesse, ou la forte exposition aux chocs des hublots. De plus, cette position est particulièrement sensible à la charge d'attaque qui peut être intégrée dans un engin volant autoguidé.

L'utilisation de matériaux durs tels que le saphir pour constituer les hublots permet d'améliorer la résistance de ces hublots. La transparence des matériaux dans une bande spectrale d'intérêt est toutefois essentielle pour un hublot et la solidité n'est donc pas le seul critère de choix. Par exemple, le saphir ne permet pas de détecter des signaux dans certaines bandes spectrales infrarouges, comme par exemple pour des longueurs d'onde entre 7 et 14 µm. Il est alors nécessaire d'utiliser un autre matériau, tel que le sulfure de zinc, plus fragile.

Certains dispositifs de détection optique présentent des hublots inclinés, ce qui permet d'augmenter l'incidence des agressions et réduire l'impact des chocs. Cette inclinaison est néanmoins limitée par des contraintes d'aérodynamisme et de symétrie sur le dôme des engins volants autoguidés.

Certains dispositifs de détection optique sont également positionnés sur la voilure des engins volants autoguidés pour limiter les dommages.

Le document US 2 823 612 A décrit un système optique de têtes chercheuses de cible pour missiles guidés, permettant de transmettre les rayons lumineux d'une cible sur un plan focal pour un mécanisme de commande du missile.

Il est souhaitable de fournir une solution qui permette de limiter l'exposition aux chocs et à l'échauffement thermique d'un dispositif de détection optique d'un engin volant autoguidé. Il est de plus souhaitable de fournir une solution qui s'adapte à de nombreuses bandes spectrales de détection. Il est aussi souhaitable de fournir une solution qui respecte l'aérodynamisme de l'engin volant autoguidé.

### EXPOSE DE L'INVENTION

L'invention concerne un dispositif de détection optique comportant des hublots disposés en collerette sur un engin volant autoguidé.

Un objet de la présente invention est de proposer un dispositif de détection optique compris dans un engin volant autoguidé, l'engin volant autoguidé étant composé d'un dôme situé en tête de l'engin volant autoguidé, d'un dispositif de propulsion situé à l'arrière de l'engin volant autoguidé et d'un corps situé entre le dôme et le dispositif de propulsion. Le dispositif de détection optique comporte au moins deux hublots disposés en collerette sur le pourtour du corps de l'engin volant autoguidé.

Le dispositif de détection optique comporte en outre, pour un moins une partie des hublots, un système optique associé à chaque hublot, le système optique étant placé derrière le hublot et comportant un miroir courbe réfléchissant le signal optique vers un miroir plan. Le dispositif de détection optique comporte également au moins un capteur optique sur lequel est dirigé au moins un signal optique réfléchi par un miroir courbe et un miroir plan, le capteur optique étant relié à un dispositif de traitement de l'information.

Ainsi, il est possible de limiter l'exposition aux chocs et à l'échauffement thermique d'un dispositif de détection optique de l'engin volant autoguidé tout en conservant la symétrie de l'engin volant autoguidé.

Ainsi, le signal optique reçu à travers les hublots peut être traité et analysé.

Selon un mode particulier de réalisation de l'invention, les hublots sont inclinés par rapport à l'axe de propagation de l'engin volant autoguidé de telle manière que l'angle formé par la normale à la surface des hublots et par l'axe de propagation de l'engin volant autoguidé soit compris entre 10° et 60°.

Ainsi, les effets de l'échauffement thermique et les impacts liés à l'environnement sont minimisés. De plus, l'aérodynamisme de l'engin volant autoguidé est conservé. Selon un mode particulier de réalisation de l'invention, les hublots ont une surface plane.

Ainsi, la fabrication du dispositif de détection optique et des hublots est effectuée de manière aisée. De plus, le traitement du signal optique traversant le hublot est simplifié.

Selon un mode particulier de réalisation de l'invention, le dispositif de détection optique comporte en outre pour chaque capteur optique un système de focalisation placé entre le miroir plan et le capteur optique.

Ainsi, la focalisation effectuée par les miroirs peut être ajustée sans qu'il y ait besoin de déplacer les miroirs et des erreurs de focalisation peuvent être corrigées.

Selon un mode particulier de réalisation de l'invention, tous les hublots du dispositif de détection optique présentent des caractéristiques optiques identiques. Tous les systèmes optiques associés aux hublots dirigent et focalisent les signaux optiques reçus à travers les hublots sur un même capteur optique et le capteur optique génère une information représentative de l'ensemble des signaux optiques reçus à travers lesdits hublots.

Ainsi, il est possible d'obtenir une image d'un objet situé à l'avant de l'engin volant autoguidé.

Selon un mode particulier de réalisation de l'invention, le capteur optique est intégré dans un module de filtrage comportant au moins deux filtres spectraux de bandes spectrales différentes. Le module de filtrage extrait, à partir des signaux optiques reçus, un signal optique filtré dans chacune des bandes spectrales et génère une information représentative de chaque signal optique filtré.

Ainsi, il est possible d'obtenir, à partir de hublots de caractéristiques optiques identiques, plusieurs images d'un objet dans différentes bandes spectrales. Selon un mode particulier de réalisation de l'invention, l'un au moins des hublots présente des caractéristiques optiques différentes des autres hublots. Tous les systèmes optiques associés à des hublots de caractéristiques optiques identiques dirigent et focalisent les signaux optiques reçus à travers les hublots sur un même capteur optique et des systèmes optiques associés à des hublots de caractéristiques optiques différentes dirigent et focalisent les signaux optiques reçus à travers les hublots de caractéristiques optiques différentes sur des capteurs optiques différents.

Ainsi, il est possible d'obtenir plusieurs images d'un même objet avec des caractéristiques optiques différentes.

Selon un mode particulier de réalisation de l'invention, les hublots de caractéristiques optiques différentes présentent des bandes spectrales différentes.

Ainsi, il est possible d'obtenir plusieurs images d'un même objet dans différentes bandes spectrales. De plus, il est possible d'adapter les hublots en utilisant des matériaux adaptés aux bandes spectrales de détection et qui dont la résistance aux chocs est la meilleure pour chaque bande spectrale.

L'invention concerne également un engin volant autoguidé, comportant un tel dispositif de détection optique.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
la Fig. 1 illustre schématiquement un engin volant autoguidé dans lequel la présente invention est implémentée ;
la Fig. 2a illustre schématiquement en vue de profil un dispositif de détection optique comportant des hublots disposés en collerette sur le corps d'un engin volant autoguidé ;
la Fig. 2b illustre schématiquement en vue de face un dispositif de détection optique comportant des hublots disposés en collerette sur le corps d'un engin volant autoguidé ;
la Fig. 3 représente l'inclinaison de chaque hublot par rapport à l'axe de propagation de l'engin volant autoguidé ;
la Fig. 4 illustre schématiquement un premier exemple du chemin d'un signal optique dans le dispositif de détection optique, dans lequel les hublots du dispositif de détection optique disposés en collerette ont des caractéristiques identiques ;
la Fig. 5 illustre schématiquement un second exemple du chemin d'un signal optique dans le dispositif de détection optique, dans lequel les hublots du dispositif de détection optique disposés en collerette ont des caractéristiques différentes ;
la Fig. 6 illustre schématiquement un dispositif de détection optique qui comporte un imageur derrière un hublot ; et
la Fig. 7 illustre schématiquement un dispositif de détection optique qui comporte un imageur orienté à travers le hublot vers le côté de l'engin volant autoguidé.

### EXPOSE DETAILLE DE MODES DE REALISATION

La présente invention consiste en un dispositif de détection optique dont les hublots sont placés en collerette sur le corps d'un engin volant autoguidé.

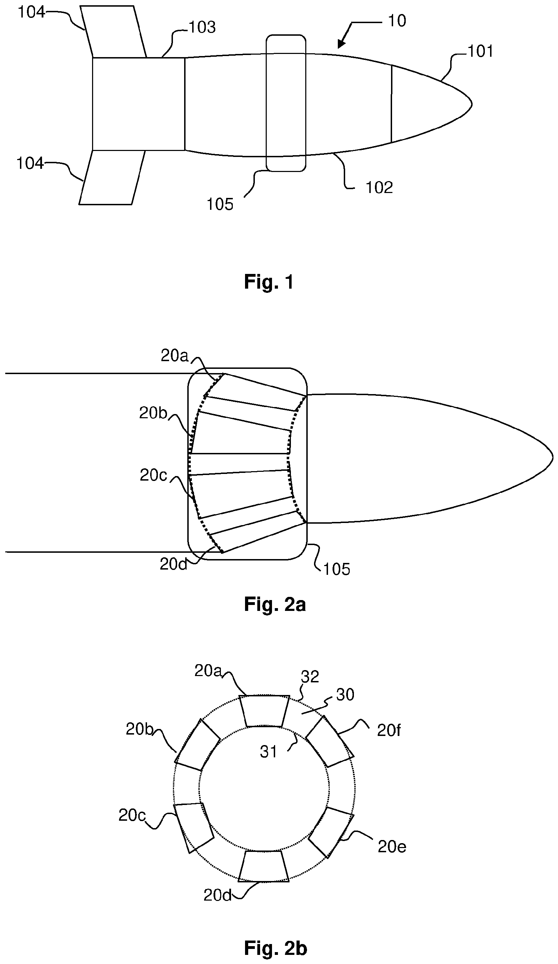

La **Fig. 1** illustre schématiquement l'engin volant autoguidé 10 qui comporte un dôme 101 situé en tête de l'engin volant autoguidé 10, un dispositif de propulsion 103 situé à l'arrière de l'engin et un corps 102 situé entre le dôme 101 et le dispositif de propulsion 103. L'engin volant autoguidé 10 comporte également une voilure 104 qui est constituée d'appendices pouvant être situés à l'arrière de l'engin volant autoguidé 10 au niveau du dispositif de propulsion 103 ou sur le corps 102. L'engin volant autoguidé 10 comporte en outre un dispositif de détection optique 105 dont les hublots sont disposés, selon la présente invention, en collerette sur le corps 102.

La **Fig. 2a** montre, en vue de profil, le dispositif de détection optique 105 dont les hublots sont disposés en collerette sur le corps 102 de l'engin volant autoguidé 10. Le dispositif de détection optique 105 comporte plusieurs hublots 20a, 20b, 20c et 20d correspondant à des fenêtres à travers lesquelles le signal optique provenant de l'extérieur est récupéré. Dans l'exemple de la Fig. 2a, quatre hublots 20a à 20d sont représentés. Les hublots 20a à 20d sont disposés en collerette sur la surface de l'engin volant autoguidé 10. En d'autres termes les hublots 20a à 20d sont positionnés sur le pourtour du corps 102 de l'engin volant autoguidé 10, formant ainsi une couronne autour de l'engin volant autoguidé 10.

La disposition en collerette des hublots 20 conserve la symétrie de l'engin volant autoguidé 10 et son aérodynamisme. La disposition des hublots 20 sur le corps 102 permet de minimiser les effets de l'échauffement thermique ou des impacts liés à l'environnement tels que la pluvio-érosion.

Les hublots peuvent être identiques mais également différer les uns des autres par la nature de leur matériau. Par exemple, l'un des hublots peut être constitué de saphir, ce qui permet la récupération de signaux optiques dans la bande spectrale de 0,3 µm à 5 µm tandis qu'un autre hublot peut être en sulfure de zinc, plus fragile que le saphir mais permettant la récupération de signaux optiques dans une bande spectrale de longueurs d'onde plus élevées, jusqu'à 15 µm. Les hublots peuvent également différer les uns des autres par leurs dimensions et la courbure de leur surface. Les hublots peuvent présenter ainsi une surface extérieure plane, ce qui permet une fabrication plus aisée et simplifie le traitement d'un signal optique reçu à travers le hublot.

La **Fig. 2b** présente en vue de face le dispositif de détection optique 105 dont les hublots sont disposés en collerette. La récupération du signal optique se fait dans une bande ou une zone annulaire 30 sur le pourtour de l'engin volant autoguidé 10 délimitée par le périmètre extérieur 31 de la partie de l'engin volant autoguidé 10 située à l'avant du dispositif de détection optique 105 d'une part et le périmètre extérieur 32 de la partie de l'engin volant autoguidé 10 située à l'arrière du dispositif de détection optique 105 d'autre part. Les hublots 20a à 20f sont situés dans la zone annulaire 30 et sont répartis tout autour de l'engin. Ils sont disposés de manière régulière ou avec des espacements variables. Dans l'exemple de la Fig. 2b, six hublots sont représentés. Bien entendu, un nombre plus ou moins important de hublots peut être utilisé par la présente invention.

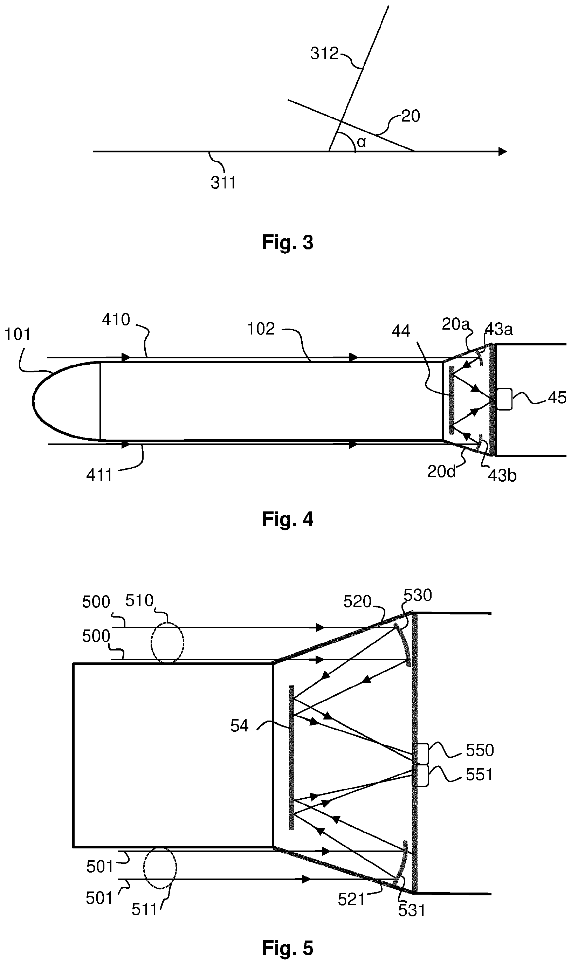

La **Fig. 3** représente l'inclinaison de chaque hublot 20 par rapport à l'axe de propagation de l'engin volant autoguidé 10.

Chaque hublot 20 est incliné par rapport à la surface du corps 102 de l'engin volant autoguidé 10 de telle sorte qu'un signal optique provenant de l'avant de l'engin volant autoguidé 10 puisse être récupéré.

L'angle α entre l'axe de propagation 311 de l'engin volant autoguidé 10 et la normale 312 à la surface du hublot 20 est compris entre 10° et 60°, préférentiellement entre 20° et 40°.

La **Fig. 4** illustre schématiquement un premier exemple du chemin de signaux optiques dans le dispositif de détection optique 105, dans lequel les hublots du dispositif de détection optique 105 ont des caractéristiques identiques.

Le dispositif de détection optique 105 comporte dans cet exemple deux hublots 20a et 20d. Il comporte également un système optique associé à chaque hublot, le premier système optique associé au hublot 20a comporte un miroir courbe 43a qui réfléchit le signal optique vers un miroir plan 44, le miroir plan 44 réfléchissant le signal optique vers un capteur optique 45, et le second système optique associé au hublot 20d comporte un miroir courbe 43b qui réfléchit le signal optique vers le miroir plan 44, le miroir plan 44 réfléchissant le signal optique vers le capteur optique 45.

Le faisceau 410 matérialise le chemin optique, à travers le dispositif de détection optique 105, du signal optique provenant de l'avant de l'engin volant autoguidé 10 selon une direction de propagation entre 2,5° et 5° par rapport à celle dudit engin volant autoguidé 10 et incident sur le hublot 20a. Le faisceau 410 traverse le hublot incliné 20a placé sur le corps 102 de l'engin volant autoguidé 10, est focalisé et réfléchi par le miroir courbe 43a vers le miroir plan 44 puis à nouveau réfléchi par le miroir plan 44 vers le capteur optique 45. De manière similaire et symétrique, le faisceau 411 matérialise le chemin optique du signal optique provenant de l'avant de l'engin volant autoguidé 10 avec une direction de propagation entre 2,5° et 5° par rapport à celle dudit engin volant autoguidé 10 et incident sur un hublot 20d. Le faisceau 411 traverse le hublot 20d de matériau identique au hublot 20a, est focalisé et réfléchi par le miroir courbe 43b vers le miroir plan 44, puis réfléchi à nouveau par le miroir plan 44 vers le capteur optique 45.

Le capteur optique 45 reçoit ainsi conjointement les signaux optiques matérialisés par les faisceaux respectifs 410 et 411. Le capteur optique 45 génère ensuite une information représentative de l'ensemble des signaux optiques détectés et transmet ladite information vers un dispositif de traitement de l'information.

Dans le cas du dispositif de détection optique 105 comportant par exemple six hublots 20a à 20f identiques, la réception, à travers l'ensemble des hublots 20a à 20f, de signaux optiques issus d'un objet situé optiquement à l'infini par rapport au dispositif de détection optique 105, leur focalisation sur un même capteur optique 45 et la génération d'une information représentative de l'ensemble desdits signaux optiques, permet d'obtenir par exemple une image de l'objet.

Dans un mode de réalisation particulier, un système de focalisation non représenté en Fig. 4 est ajouté au dispositif de détection optique 105 devant le capteur optique 45. Le système de focalisation est inséré aux systèmes optiques de telle sorte qu'il est placé entre le miroir plan 44 et le capteur optique 45 et permet ainsi d'ajuster la focalisation effectuée par les miroirs et de corriger une éventuelle erreur de focalisation des faisceaux.

Dans un mode de réalisation particulier, le capteur optique 45 est intégré à un module de filtrage comportant des filtres spectraux présentant différentes bandes spectrales. Le module de filtrage permet ainsi d'extraire à partir des signaux optiques reçus un signal optique filtré dans chacune desdites bandes spectrales. Le module de filtrage génère alors une information représentative de chacun des signaux optiques filtrés, autrement dit représentative des signaux optiques reçus dans chacune desdites bandes spectrales.

La **Fig. 5** illustre schématiquement un second exemple du chemin de signaux optiques dans le dispositif de détection optique 105, dans lequel les hublots disposés en collerette ont des caractéristiques différentes.

Dans cet exemple, le dispositif de détection optique 105 comporte deux hublots 520 et 521 de caractéristiques différentes. Plus précisément, le hublot 520 laisse passer une première gamme de longueurs d'onde, autrement dit, il présente une première bande spectrale tandis que le hublot 521 laisse passer une seconde gamme de longueurs d'onde, autrement dit, il présente une seconde bande spectrale, différente de la première bande spectrale du hublot 520.

A chacune des bandes spectrales est associée une voie optique de détection. Une voie optique de détection comprend ainsi un ou plusieurs hublots de même bande spectrale, un système optique associé à chacun des hublots permettant de diriger et focaliser les signaux optiques sur une même zone et un capteur optique situé dans ladite zone et sensible aux longueurs d'onde de la bande spectrale desdits hublots.

Le faisceau 510 est constitué de rayons tels que les rayons 500 et matérialise le chemin du signal optique provenant de l'avant de l' engin volant autoguidé 10 et incident sur un hublot 520. Le faisceau 510 traverse le hublot 520 vers un système optique à travers lequel le faisceau 510 est réfléchi et focalisé par le miroir courbe 530 en direction du miroir plan 54 puis à nouveau réfléchi sur le miroir plan 54 vers un capteur optique 550 sensible dans la bande spectrale du hublot 520. Le capteur optique 550 reçoit ainsi le signal optique matérialisé par le faisceau 510 dans la bande spectrale du hublot 520. Le faisceau 511 est constitué de rayons tels que les rayons 501 et matérialise le chemin du signal optique provenant de l'avant de l'engin volant autoguidé 10 et incident sur un hublot 521. Le faisceau 511 traverse le hublot 521 vers un système optique à travers lequel le faisceau 511 est réfléchi et focalisé par le miroir courbe 531 en direction du miroir plan 54 puis à nouveau réfléchi par le miroir plan 54 vers un capteur optique 551 sensible dans la bande spectrale du hublot 521. Le capteur optique 551 reçoit ainsi le signal optique matérialisé par le faisceau 511 dans la bande spectrale du hublot 521.

Chacun des capteurs optiques 550 et 551 génère une information représentative du signal optique qu'il détecte et transmet ladite information à un dispositif de traitement de l'information.

Dans un mode de réalisation particulier, un système de focalisation non représenté en Fig. 5 est ajouté à chaque voie optique de détection du dispositif de détection optique 105 devant chaque capteur optique 550 et 551. Par exemple, un système de focalisation est inséré au système optique associé au hublot 520 et placé entre le miroir plan 54 et le capteur optique 550 et un autre système de focalisation est inséré au système optique associé au hublot 521 et placé entre le miroir plan 54 et le capteur optique 551. Les systèmes de focalisation permettent d'ajuster la focalisation effectuée par les miroirs et de corriger une éventuelle erreur de focalisation des faisceaux.

Dans un mode de réalisation particulier, le dispositif de détection optique 105 est divisé en deux secteurs, autrement dit en deux voies optiques de détection, chacune des voies optiques de détection comprend des hublots de caractéristiques identiques entre elles et différentes des caractéristiques des hublots de l'autre voie optique de détection. Par exemple, le dispositif de détection optique 105 est divisé en deux demi-couronnes. La première demi-couronne correspondant à la première voie optique de détection comporte les hublots 20a, 20b et 20c présentant tous la même bande spectrale telle que celle du hublot 520, un système optique associé à chacun des hublots 20a, 20b et 20c et un capteur optique sensible à la bande spectrale des hublots 20a, 20b et 20c tel que le capteur optique 550. Similairement, la seconde demi-couronne correspondant à la seconde voie optique de détection comporte les hublots 20d, 20e et 20f présentant tous une seconde bande spectrale telle que celle du hublot 521, ladite seconde bande spectrale étant différente de la première bande spectrale des hublots 20a, 20b et 20c. La seconde voie optique de détection comporte également un système optique associé à chacun des hublots 20d, 20e et 20f, et un capteur optique sensible à la bande spectrale desdits hublots 20d, 20e et 20f tel que le capteur optique 551. La première voie optique de détection permet ainsi de détecter un signal optique dans la première bande spectrale tandis que la seconde voie optique de détection détecte un signal optique dans la seconde bande spectrale.

Pour un objet situé optiquement à l'infini par rapport au dispositif de détection optique 105, la réception, à travers deux voies optiques de détection distinctes, des signaux optiques issus de l'objet, la focalisation pour chaque voie optique de détection des signaux optiques sur le même capteur optique, et la génération pour chacun des capteurs optiques d'une information représentative du signal optique détecté permet d'obtenir par exemple deux images du même objet dans deux bandes spectrales différentes.

Dans un autre mode de réalisation, les hublots ont tous des caractéristiques distinctes, par exemple des bandes spectrales différentes, et le nombre de voies optiques de détection correspond alors au nombre de bandes spectrales transmises autrement dit au nombre de hublots.

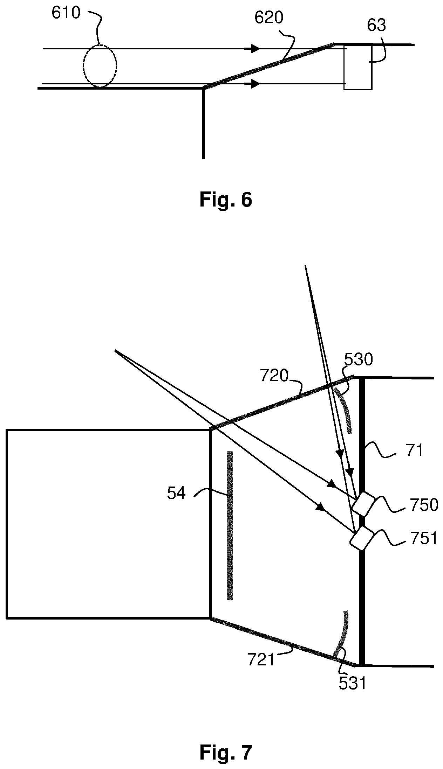

La **Fig. 6** illustre schématiquement un dispositif de détection optique 105 dont les hublots sont disposés en collerette qui comporte un imageur placé derrière un hublot. Le faisceau 610 matérialise le chemin optique d'un signal optique incident sur un hublot 620 et provenant de l'avant de l'engin volant autoguidé 10 dans une direction de propagation dont l'inclinaison est entre 2,5° et 5° par rapport à la direction de propagation de l'engin volant autoguidé 10. Le faisceau 610 traverse le hublot 620 et est directement détecté par un imageur 63, par exemple un imageur sur cardan. L'imageur 63 est placé juste derrière le hublot et orienté vers l'extérieur de l'engin volant autoguidé 10, par exemple vers l'avant, de telle sorte que l'axe de détection dudit imageur 63 soit dirigé dans l'axe d'un faisceau incident tel que le faisceau 610. La position de l'imageur 63 permet ainsi de détecter un signal optique directement à travers un hublot sans nécessiter de système optique ni de réflexion sur un miroir.

Dans l'exemple de la Fig. 6, un seul hublot est affecté à l'utilisation d'un imageur 63. Les autres hublots du dispositif de détection optique 105 peuvent être également affectés à l'utilisation d'un imageur 63 ou bien utilisés pour la détection du signal optique dans les configurations telles que présentées dans les Figs. 4 ou 5. En d'autres termes, le dispositif de détection optique 105 comporte, pour un premier ensemble de hublots, un imageur 63 associé à chaque hublot, l'imageur 63 étant placé derrière le hublot, et le dispositif de détection optique 105 comporte, pour un second ensemble de hublots, un système optique associé à chaque hublot, le système optique étant placé derrière le hublot et comportant un miroir courbe réfléchissant le signal optique vers un miroir plan, ainsi qu'au moins un capteur optique sur lequel est dirigé au moins un signal optique réfléchi par un miroir courbe et un miroir plan, le capteur optique étant relié à un dispositif de traitement de l'information.

La **Fig. 7** illustre schématiquement un dispositif de détection optique 105 dont les hublots sont disposés en collerette et qui comporte un imageur 750 ou plusieurs imageurs 750 et 751 placés au centre de l'engin volant autoguidé 10. Les imageurs 750 et 751 sont montés sur une plateforme 71 qui permet de faire varier leur orientation. Chacun des imageurs 750 et 750 est ainsi orienté de telle sorte que son axe de détection soit dirigé vers l'extérieur de l'engin volant autoguidé 10 à travers un hublot latéral, par exemple le hublot 720. L'orientation des imageurs 750 et 751 permet ainsi de détecter un signal optique issu des côtés de l'engin volant autoguidé directement à travers un hublot sans nécessiter de système optique ni de réflexion sur un miroir.

## Revendications

1. Dispositif de détection optique compris dans un engin volant autoguidé, l'engin volant autoguidé étant composé d'un dôme situé en tête de l'engin volant autoguidé, d'un dispositif de propulsion situé à l'arrière de l'engin volant autoguidé et d'un corps situé entre le dôme et le dispositif de propulsion, le dispositif de détection optique (105) comportant au moins deux hublots (20a, 20b, 20c, 20d) disposés en collerette sur le pourtour du corps de l'engin volant autoguidé, et le dispositif étant **caractérisé en ce qu'**il comporte en outre, pour au moins une partie des hublots :
- un système optique associé à chaque hublot, le système optique étant placé derrière ledit hublot et comportant un miroir courbe réfléchissant le signal optique vers un miroir plan,
- au moins un capteur optique sur lequel est dirigé au moins un signal optique réfléchi par un miroir courbe et un miroir plan, le capteur optique étant relié à un dispositif de traitement de l'information.

2. Dispositif de détection optique selon la revendication 1, **caractérisé en ce que** les hublots sont inclinés par rapport à l'axe de propagation de l'engin volant autoguidé de telle manière que l'angle formé par la normale à la surface des hublots et par l'axe de propagation de l'engin volant autoguidé soit compris entre 10° et 60°.

3. Dispositif de détection optique selon l'une des revendications 1 et 2, **caractérisé en ce que** les hublots ont une surface plane.

4. Dispositif de détection optique selon l'une des revendications 1 à 3, **caractérisé en ce que** le dispositif de détection optique comporte en outre pour chaque capteur optique un système de focalisation placé entre le miroir plan et le capteur optique.

5. Dispositif de détection optique selon l'une des revendications 1 à 4, **caractérisé en ce que** tous les hublots présentent des caractéristiques optiques identiques, tous les systèmes optiques associés aux hublots dirigent et focalisent les signaux optiques reçus à travers les hublots sur un même capteur optique et le capteur optique génère une information représentative de l'ensemble des signaux optiques reçus à travers les hublots.

6. Dispositif de détection optique selon la revendication 5, **caractérisé en ce que** le capteur optique est intégré dans un module de filtrage comportant au moins deux filtres spectraux de bandes spectrales différentes, le module de filtrage extrait, à partir des signaux optiques reçus, un signal optique filtré dans chacune des bandes spectrales et génère une information représentative de chaque signal optique filtré.

7. Dispositif de détection optique selon l'une quelconque des revendications 1 à 4, **caractérisé en ce qu'**un au moins des hublots présente des caractéristiques optiques différentes des autres hublots, **en ce que** tous les systèmes optiques associés à des hublots de caractéristiques optiques identiques dirigent et focalisent les signaux optiques reçus à travers les hublots sur un même capteur optique et **en ce que** des systèmes optiques associés à des hublots de caractéristiques optiques différentes dirigent et focalisent les signaux optiques reçus à travers les hublots de caractéristiques optiques différentes sur des capteurs optiques différents.

8. Dispositif de détection optique selon la revendication 7, **caractérisé en ce que** les hublots de caractéristiques optiques différentes présentent des bandes spectrales différentes.

9. Engin volant autoguidé, **caractérisé en ce qu'**il comporte un dispositif de détection optique selon l'une quelconque des revendications 1 à 8.

## Patentansprüche

1. Optische Erfassungseinrichtung, in einem selbstgesteuerten Fluggerät enthalten, wobei sich am Kopf des selbstgesteuerten Fluggeräts eine Kuppel, am Heck des selbstgesteuerten Fluggeräts eine Antriebsvorrichtung und zwischen der Kuppel und der Antriebsvorrichtung ein Körper befindet. Die optische Erfassungsvorrichtung (105) umfasst mindestens zwei Bullaugen (20a, 20b, 20c, 20d), die in einem Bund an den Körperrändern des selbstgesteuerten Fluggeräts angeordnet sind. Und die Einrichtung ist **dadurch gekennzeichnet, dass** sie außerdem für zumindest einige der Bullaugen Folgendes umfasst:
- ein optisches System, das mit jedem Bullauge verbunden ist, wobei das optische System
hinter dem Bullauge angeordnet ist und einen gekrümmten Spiegel umfasst, der as optische
Signal zu einem ebenen Reflexionsspiegel reflektiert,
- mindestens einen optischen Sensor, auf den mindestens ein optisches Signal gerichtet wird,
das von einem gekrümmten Spiegel und einem ebenen Reflexionsspiegel reflektiert wird, wobei der optische Sensor mit einer Informationsverarbeitungsvorrichtung verbunden ist.

2. Optische Erfassungseinrichtung nach Anspruch 1, **dadurch gekennzeichnet, dass** die Bullaugen in Bezug auf die Ausbreitungsachse des selbststeuernden Fluggeräts so geneigt sind, dass der Winkel zwischen der Normalen auf der Oberfläche der Bullaugen und der Ausbreitungsachse des selbststeuernden Fluggeräts zwischen 10° und 60° beträgt.

3. Optische Erfassungseinrichtung nach einem der Ansprüche 1 oder 2, **dadurch gekennzeichnet,**
**dass** die Bullaugen eine ebene Oberfläche haben.

4. Optische Erfassungseinrichtung nach einem der Ansprüche 1 bis 3, **dadurch gekennzeichnet,**
**dass** die optische Erfassungseinrichtung außerdem für jeden optischen Sensor ein Fokussierungssystem umfasst, das zwischen dem ebenen Reflexionsspiegel und dem optischen Sensor angeordnet ist.

5. Optische Erfassungseinrichtung nach einem der Ansprüche 1 bis 4, **dadurch gekennzeichnet,**
**dass** alle Bullaugen identische optische Eigenschaften aufweisen, alle den Bullaugen zugeordneten optischen Systeme die durch die Bullaugen empfangenen optischen Signale auf denselben optischen Sensor lenken und fokussieren und der optische Sensor eine Information erzeugt, die für die Gesamtheit der durch die Bullaugen empfangenen optischen Signale repräsentativ ist.

6. Optische Erfassungseinrichtung nach Anspruch 5, **dadurch gekennzeichnet, dass** der optische
Sensor in ein Filtermodul integriert ist, das mindestens zwei Spektralfilter mit unterschiedlichen Spektralbändern umfasst, wobei das Filtermodul aus den empfangenen optischen Signalen ein gefiltertes optisches Signal in jedem der Spektralbänder extrahiert und eine für jedes gefilterte optische Signal repräsentative Information erzeugt.

7. Optische Erfassungsvorrichtung nach einem der Ansprüche 1 bis 4, **dadurch gekennzeichnet,**
**dass** mindestens eines der Bullaugen andere optische Eigenschaften als die anderen Bullaugen aufweist. Und zwar so, dass alle optischen Systeme, die mit Bullaugen mit identischen optischen Eigenschaften verbunden sind, die durch die Bullaugen empfangenen optischen Signale auf denselben optischen Sensor lenken und fokussieren. Und so, dass optische Systeme, die mit Bullaugen mit unterschiedlichen optischen Eigenschaften verbunden sind, die optischen Signale, die durch die Bullaugen mit unterschiedlichen optischen Eigenschaften empfangen werden, auf unterschiedliche optische Sensoren lenken und fokussieren.

8. Optische Erfassungseinrichtung nach Anspruch 7, **dadurch gekennzeichnet, dass** die Bullaugen
mit unterschiedlichen optischen Eigenschaften unterschiedliche Spektralbänder aufweisen.

9. Selbstgesteuertes Fluggerät, **dadurch gekennzeichnet, dass** es eine optische Erfassungseinrichtung nach einem der Ansprüche 1 bis 8 aufweist.

## Claims

1. Optical detection device included in a self-guided flying vehicle, the self-guided flying vehicle being composed of a dome located at the head of the self-guided flying vehicle, a propulsion device located at the rear of the self-guided flying vehicle and a body located between the dome and the propulsion device, the optical detection device (105) comprising at least two portholes (20a, 20b, 20c, 20d) disposed in a collar on the periphery of the body of the self-guided flying vehicle, and the device being **characterised in that** it further comprises, for at least some of the portholes:
- an optical system associated with each porthole, the optical system being placed behind said porthole and comprising a curved mirror reflecting the optical signal towards a plane mirror,
- at least one optical sensor whereon at least one optical signal reflected by a curved mirror and a plane mirror is directed, the optical sensor being connected to an information processing device.

2. Optical detection device according to claim 1, **characterised in that** the portholes are inclined with respect to the propagation axis of the self-guided flying vehicle so that the angle formed by the normal to the surface of the portholes and by the propagation axis of the self-guided flying vehicle is between 10° and 60°.

3. Optical detection device according to one of claims 1 and 2, **characterised in that** the portholes have a plane surface.

4. Optical detection device according to one of claims 1 to 3, **characterised in that** the optical detection device further comprises, for each optical sensor, a focusing system placed between the plane mirror and the optical sensor.

5. Optical detection device according to one of claims 1 to 4, **characterised in that** all the portholes have identical optical characteristics, all the optical systems associated with the portholes direct and focus the optical signals received through the portholes onto the same optical sensor, and the optical sensor generates information representing all the optical signals received through the portholes.

6. Optical detection device according to claim 5, **characterised in that** the optical sensor is integrated in a filtering module comprising at least two spectral filters of different spectral bands, the filtering module extracts, from the optical signals received, a filtered optical signal in each of the spectral bands and generates information representing each filtered optical signal.

7. Optical detection device according to any one of claims 1 to 4, **characterised in that** at least one of the portholes has optical characteristics different from the other portholes, **in that** all the optical systems associated with portholes with identical optical characteristics direct and focus the optical signals received through the portholes onto the same optical sensor and **in that** optical systems associated with portholes with different optical characteristics direct and focus the optical signals received through the portholes with different optical characteristics onto different optical sensors.

8. Optical detection device according to claim 7, **characterised in that** the portholes with different optical characteristics have different spectral bands.

9. Self-guided flying vehicle, **characterised in that** it comprises an optical detection device according to any one of claims 1 to 8.
